# EUROPÄISCHE PATENTSCHRIFT

(11) **EP 1 183 579 B1**
(45) Veröffentlichungstag und Bekanntmachung des Hinweises auf die Patenterteilung: **06.10.2004**
(21) Anmeldenummer: 00938574.1
(22) Anmeldetag: 19.05.2000
(51) Int. Cl.: G05D 3/12, G05B 9/02

(54) **REGELUNGSSYSTEM MIT MODELLGESTÜTZTER SICHERHEITSÜBERWACHUNG EINES ELEKTRONISCH GEREGELTEN STELLERS IM KRAFTFAHRZEUG**
CONTROL SYSTEM WHICH CARRIES OUT THE MODEL-SUPPORTED SAFETY MONITORING OF AN ELECTRONICALLY REGULATED CONTROLLER IN THE MOTOR VEHICLE
SYSTEME DE REGULATION AVEC SURVEILLANCE DE SECURITE ASSISTEE PAR MODELE D'UN ORGANE DE POSITIONNEMENT A REGULATION ELECTRONIQUE MONTE DANS UN VEHICULE AUTOMOBILE

(30) Priorität: 19.05.1999 DE 19922979; 18.04.2000 DE 10019152
(43) Veröffentlichungstag der Anmeldung: 06.03.2002
(73) Patentinhaber: ROBERT BOSCH GMBH, 70442 Stuttgart (DE)
(72) Erfinder: HOMMEL, Mathias, D-70825 Korntal (DE); KRAEMER, Wolfgang, D-70191 Stuttgart (DE)
(86) Internationale Anmeldenummer: PCT/DE2000/001587
(87) Internationale Veröffentlichungsnummer: WO 2000/072100

(56) Entgegenhaltungen:
- EP-A- 0 526 418
- EP-A- 0 660 017
- EP-A- 0 864 949
- US-A- 4 159 444
- US-A- 4 345 191
- US-A- 4 509 110
- US-A- 4 641 517
- US-A- 5 233 512

## Beschreibung

### Stand der Technik

Die Erfindung betrifft ein System zur Regelung eines Stellers in einem Kraftfahrzeug gemäß dem Oberbegriff des Anspruchs 1 und eine Verwendung dieses Regelungssystems für ein elektronisches Lenksystem, Wankstabilisierungssystem, Bremssystem sowie einen Lenkradsimulator.

Ein solches Regelungssystem ist aus der DE 40 25 847 A1 bekannt. Bei diesem bekannten Regelungssystem bildet ein Parallelmodell ausgehend von dem Sollwert durch Nachbilden des Regelkreises eine Schätzgröße für den Istwert und beeinflusst das Übertragungsverhalten eines Führungsformers, welcher seinerseits ausgehend von der Schätzgröße die Aufschaltgröße bestimmt. Sicherheitsaspekte sind von der modellgestützten Schätzung des bekannten Regelungssystems nicht berührt.

Aus der US-A-5 233 512 ist weiterhin bekannt, bei einem System zur Regelung eines einen elektrischen Stellmotor aufweisenden Stellers, in einer modellgestützten Überwachungseinrichtung, die in Abhängigkeit von Sollgrößen des elektrischen Stellmotors von durch jeweilige Sensoren gemessenen Ist-Größen desselben und auf der Basis eines ein Sollverhalten jeweils des Stellers und der in ihm enthaltenen Regelstrecken nachbildenden Modells eine Ausgangsgröße zur Bewertung einer Stellgüte des Stellers zu erzeugen.

Die Aufgabe von elektromotorischen Stellern im Kraftfahrzeug ist es häufig, Positionen mit hoher Geschwindigkeit und Genauigkeit einzustellen. Trotz robuster Regelungen kann die gewünschte Position in der geforderten Zeit oft nicht erreicht werden. Das liegt zum einen an

Charakterika des Stellers selbst, wie dessen Massenträgheit und PDI-Verhalten und zum andern am verwendeten Stellmotor, z. B. dessen Gegenmoment.

Als Beispiel sei ein elektronisches Lenksystem genannt. In einem elektronischen Lenksystem spielen Sicherheitsaspekte eine große Rolle. Im Sicherheitskonzept müssen Entscheidungen zur Bewertung der Stellgüte (der Positionsgenauigkeit und der Geschwindigkeit des als Lenksteller verwendeten Elektromotors) getroffen werden und gegebenenfalls eine Abschaltung des elektronischen Lenksystems initiiert werden. Ein Problem des dafür zu erstellenden Sicherheitskonzepts besteht darin, das richtige Kriterium zur Abschaltung des elektronischen Lenksystems zu finden. Eine einfache Auswertung der Signale von den im elektronischen Lenksystem enthaltenen Sensoren führt nicht zum Ziel; vielmehr muß das dynamische Verhalten des Systems in die Betrachtungen einbezogen werden.

### Aufgabe und Vorteile der Erfindung

Es ist Aufgabe der Erfindung, ein gattungsgemäßes Regelungssystem so anzugeben, daß es die für die Sicherheitsüberwachung eines elektromotorischen Stellglieds notwendigen Signale des Antriebs (Erreichen der Sollposition in einer definierten Zeit) bewerten und Entscheidungen zur Abschaltung fällen kann.

Diese Aufgabe wird anspruchsgemäß gelöst.

Als wesentlichen Aspekt enthält das erfindungsgemäße Regelungssystem eine modellgestützte Überwachungseinrichtung, die unter Einbezug eines Modells des Stellmotors und eines Modells der Regelstrecke die notwendige Information liefert, um die Stellgüte bewerten zu können.

Zu diesem Zweck weist die Überwachungseinrichtung einen Lastmomentschätzer und Modelle für den Stellmotor und für die Regelstrecke sowie eine Fehlerauswertungseinrichtung auf, die abhängig von den von den Modellen ermittelten theoretischen Werten und von der Lastmomentschätzung Maßnahmen zur Sicherheit der mit dem Steller verstellten Glieder bzw. des Fahrzeugs vornimmt.

Das Ergebnis der Lastmomentschätzung dient der Fehlerauswertungseinrichtung dazu, die Gültigkeit der durch die Modellbildung ermittelten Stromistwert- und Positionsistwert-Differenzsignale zu entscheiden.

Das Modell des Stellmotors ermittelt das tatsächlich vom Motor aufgebrachte Lastmoment. Daraufhin wird das vom Stellmotor aufzubringende Lastmoment abhängig vom Betriebszustand geschätzt und mit dem anhand des Modells ermittelten tatsächlichen Lastmoment verglichen.

Mit Kenntnis der Last lassen sich dann über das regelungstechnische Modell der Regelstrecke die Kenngrößen Iststrom und Position des Stellantriebs berechnen, die ihrerseits wieder mit den gemessenen Werten verglichen und von der Fehlerauswertungseinrichtung innerhalb festgelegter Grenzen auf Plausibilität überprüft werden. Ein unter Verwendung des erfindungsgemäßen Regelungssystems bzw. der Überwachungseinrichtung realisiertes Sicherheitssystem macht die genannten Plausibilitätsüberwachungen zur Grundlage der Entscheidung, ob das System abgeschaltet werden muß oder nicht.

Mit Hilfe des Modells des Stromregelkreises und des Modells des Lageregelkreises werden geschätzte Zustandsgrößen für den Stromistwert und den Positionsistwert bereitgestellt.

Die geschätzten Größen werden der Fehlerauswertungseinrichtung zugeführt, um das Sicherheitssystem zu beeinflussen, d. h. z. B. das Abschalten des Stellwerks einzuleiten.

In dem als Ausführungsbeispiel gewählten elektronischen Lenksystem wird demnach der mit dem Lastmomentschätzer abgeschätzte theoretische Wert des Lastmoments unter Zuhilfenahme von Kennlinien und Wissen über die möglichen Lastzustände ermittelt bzw. berechnet. Wenn das Fahrzeug auch mit einer kraftunterstützenden Servolenkung ausgestattet ist, ist im Lastmomentschätzer auch die (relativ einfache) Kennlinie oder das Kennlinienfeld der Servolenkung gespeichert. Abhängig vom Lenkwinkel, gemessen durch einen Winkelsensor und/oder von der Lenkgeschwindigkeit wird mittels des Kennlinienfeldes ein Schätzwert für das Lastmoment ermittelt. Durch Vergleichen der tatsächlich gemessenen Last mit der theoretisch möglichen Last läßt sich ermitteln, ob der Lenkstellmotor ordnungsgemäß arbeitet oder ob außergewöhnliche äußere Umstände oder ein Defekt des Stellmotors es notwendig machen, das System abzuschalten.

Im Beispiel des Lenkstellers für ein elektronisches Lenksystem für eine Einzelradlenkung oder für eine Lenkung von zwei durch eine Spurstange miteinander verbundenen Rädern kann somit unterschieden werden, ob sich der Stellmotor im voll funktionsfähigen Arbeitsbereich befindet, oder ob eine Fehlfunktion gegebenenfalls eine Abschaltung notwendig macht.

Ein wesentlicher Vorteil der Verwendung des erfindungsgemäßen Regelungssystems für ein elektronisches Lenksystem liegt darin, daß nur mit Hilfe von Winkelsensoren und einem Stromfühler - ohne einen Drehmomentensensor - beurteilt werden kann, ob das Regelungssystem ordnungsgemäß arbeitet oder ob aufgrund von Wellenbruch, Lagerverschleiß, Zahnflankenbruch, erhöhter Reibungskräfte durch Verschleiß und ähnlichen oder von außergewöhnlichen äußeren Umständen (z. B. das Lenken gegen den Bordstein) eine Abschaltung des Systems notwendig ist.

Hier ist ausdrücklich hervorzuheben, daß die erfindungsgemäßen Prinzipien nicht nur bei elektronischen Lenksystemen sondern auch bei anderen, einen elektrischen Stellmotor verwendenden Stellern im Kraftfahrzeug verwendbar sind, z. B. bei elektronischen Bremssystemen, Wankstabilisierungen, Lenkradsimulatoren für Steer-by-Wire-Anwendungen, automatischen Federungs- und/oder Niveauregelungssystemen, bei denen Sicherheitsaspekte ebenfalls eine große Rolle spielen.

Nachstehend wird das erfindungsgemäße Regelungssystem allgemein und in beispielhafter Anwendung für ein einen elektromotorischen Lenksteller verwendendes elektronisches Lenksystem anhand der Zeichnung näher beschrieben.

### Zeichnung

Figur 1 zeigt Funktionsblöcke eines allgemeinen Prinzips eines Regelsystems für einen elektromotorischen Antrieb;
Figur 2 zeigt Funktionsblöcke einer erfindungsgemäße Aspekte verwirklichenden modellgestützten Sicherheitsüberwachung von Stellantrieben;
Figur 3 zeigt ein Blockschaltbild eines einen Elektromotor verwendenden Stellantriebs im Kraftfahrzeug;
Figur 4 zeigt ein Blockschaltbild ein Ausführungsbeispiel eines Stellers für ein elektronisches Lenksystem, und
Figur 5 zeigt in Form eines Funktionsblockschaltbilds eine erfindungsgemäße modellgestützte Überwachungseinrichtung zur Erzeugung von Information zur Bewertung der Stellgüte, z. B. des Lenkstellers gemäß Figur 4.

### Ausführungsbeispiel

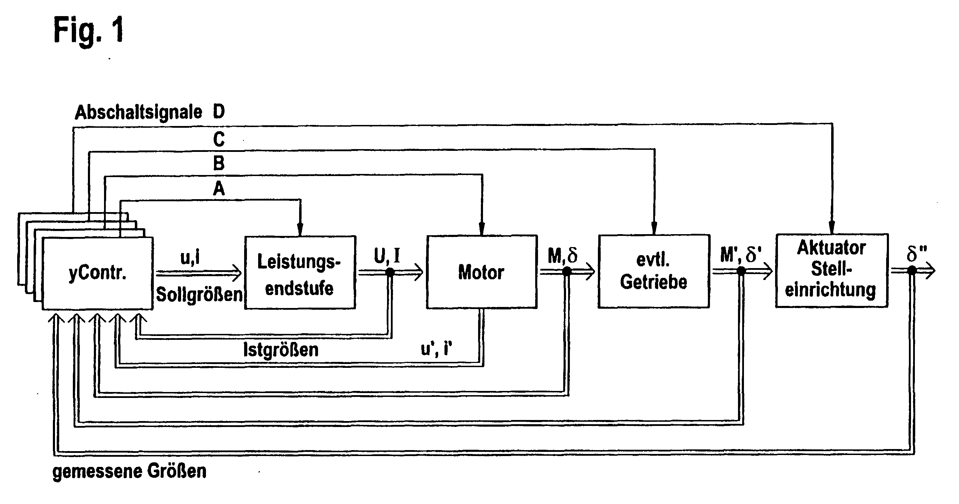

Bei dem in Figur 1 in Funktionsblöcken dargestelltem allgemeinen Prinzip eines Regelsystem für einen elektromotorischen Antrieb empfängt eine einen oder mehrere Mikrocontroller aufweisende Steuereinheit Istgrößen U, I von einer Leistungsendstufe, u', i', M, δ vom einem elektrischen Motor, M', δ' von einem optionell vorhandenen Getriebe und δ" von einem Aktuator. Aus diesen ihr zugeführten gemessenen Istgrößen kann die Mikrocontrollersteuereinheit Sollgrößen u, i und Abschaltsignale A, B, C und D erzeugen, die jeweils der Leistungsendstufe, dem Motor, dem Getriebe und dem Aktuator zum Abschalten zugeführt werden.

Die als Abschaltsignale bzw. gemessenen Größen genannten Größen bezeichneten allgemein formuliert und stellen kein Maß in einem implementierten Regelungssystem dar. D. h., es hangt von der konkreten Ausführung des Regelunassystems ab, welche Abschaltungen vorgenommen werden bzw. welche Signale gemessen werden müssen.

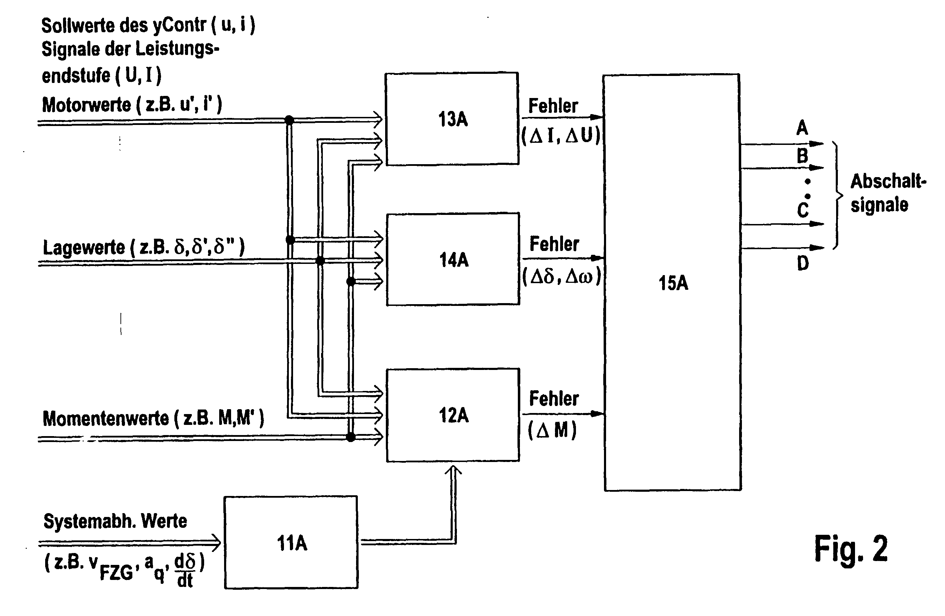

Figur 2 zeigt in Funktionsblöcken eine modellgestützte Sicherheitsüberwachung gemäß der Erfindung für mit einem elektrischen Stellmotor versehene Stellantriebe.

Diese in Figur 2 dargestellte Überwachungseinrichtung kann in der in Figur 1 dargestellten Mikrocontrollereinheit implementiert oder auch als separate Einheit realisiert sein.

Figur 2 zeigt einen Störmomentschätzer 11A, einen Ist-Momentenschätzer 12A, einen Ist-Lage-/Winkelgeschwindigkeitsschätzer 14A, einen Ist-Strom-/Spannungsschätzer 13A und eine Fehlerauswertungs-Abschaltkoordinatoreinrichtung 15A, die aus den ihr von den Schätzern 12A, 13A, 14A zugeführten Fehlersignalen Abschaltsignale A, B, C und D erzeugt.

Im einzelnen erhalten der Istmomentenschätzer 12A, der Ist-Strom-/Spannungsschätzer 13A und der Ist-Lage-/Winkelgeschwindigkeitsschätzer 14A Momentenwerte, z. B. M, M', Lagewerte, z. B. δ, δ', δ", Motorwerte, z. B. u', i', Signale der Leistungsendstufe U, I und Sollwerte des Mikrocontrollers u, i. Der Störmomentschätzer 11A empfängt systemabhängige Werte, z. B. eine Fahrzeuggeschwindigkeit v_{Fzg}, eine Fahrzeugquerbeschleunigung a_{q} und/oder die zeitliche Ableitung dδ/dt einer Winkelposition δ.

Erfindungsgemäß erzeugt der Störmomentschätzer 11A ein theoretisches Störmoment in Abhängigkeit von den zugeführten systemabhängigen Größen sowie gegebenenfalls von sensorisch gemessenen Istgrößen.

Der Ist-Strom-/Spannungsschätzer 13A und der Ist-Lage-/Winkelgeschwindigkeitsschätzer bilden ein regelungstechnisches Model der Regelstrecke und der Istmomentenschätzer 12A ein Modell des Stellmotors und berechnen abhängig von den ihn zugeführten Sollwerten, den Lagewerten und den Momentenwerten und dem vom Störmomentschätzer geschätzten theoretischen Störmoment einen theoretischen Istwert für die Position und/oder für das tatsächlich aufgebrachte Moment und/oder den Strom des Stellmotors, und die von den Schätzern ausgegebenen Fehlersignale bilden jeweils Differenzsignale zwischen dem berechneten theoretischen Istwert und dem entsprechenden sensorisch gemessenen oder einem aufgrund eines von wenigstens einem sensorisch gemessenen Wert direkt abgeleiteten Istwerts. Die Fehlersignale werden dann der Fehlerauswertungs-Abschaltkoordinatoreinrichtung 15A als Maß für die Stellgüte des Stellers eingegeben, der aus den verschiedenen Fehlersignalen dann die Abschaltsignale wahlweise erzeugen kann.

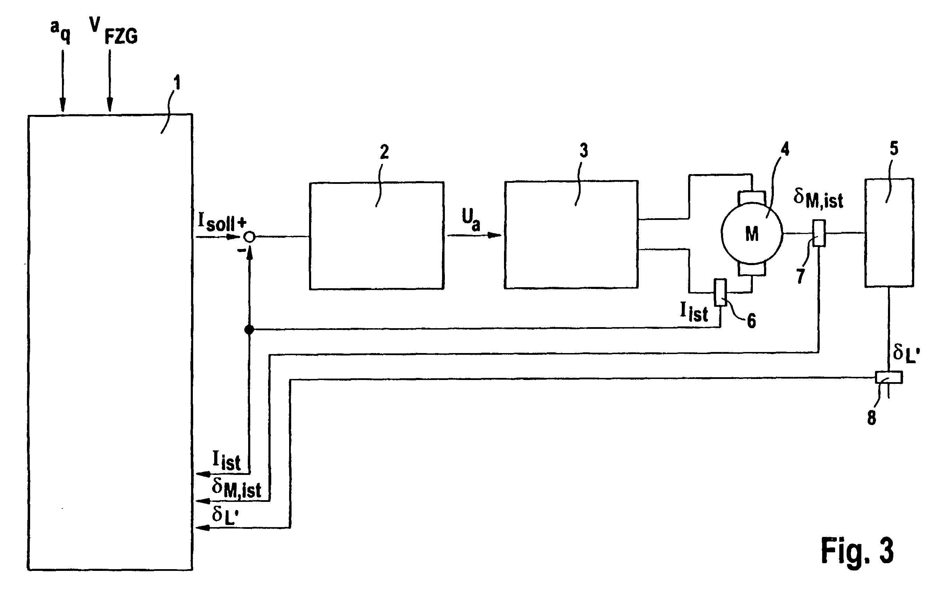

Ein Stellantrieb im Kraftfahrzeug mit einem elektrischen Stellmotor 4 ist in Figur 3 dargestellt. Er besteht aus einem Prozessrechner 1, der abhängig von Eingangssignalen Iststrom list, von einem Stromsensor 6 geliefert, der Istlage δ_{M,ist} des elektrischen Stellmotors 4, vom Positionssensor 7 geliefert, der Istlage δ_{L}' der Regelstrecke 5, vom Positionssensor 8 geliefert, und von Signalen, die einen Betriebszustand des Kraftfahrzeugs angeben, bewertet, ob aufgrund zu hoher Positions- bzw. Zeitfehler das System abgeschaltet werden muss oder nicht.

Der elektrische Stellmotor 4 ist ein elektrischer Antriebsmotor eines geeigneten Typs. Beispielhaft sei hier ein permanent erregter Gleichstrommotor genannt. Alternativ kommt auch ein elektronisch kommutierter Motor (ein sogenannter EC-Motor), ein Asynchronmotor, insbesondere ein Drehstromasynchronmotor oder auch ein Piezomotor in Frage.

Die ausgangsseitige Position des elektrischen Stellmotors 4 wird in Figur 3 beispielhaft durch einen Winkelsensor 7 gemessen.

Die Regelstrecke 5, d. h. das zu verstellende Element, ist eine Einrichtung, die mechanische Energie von einer Bewegungsform in eine andere Bewegungsform wandelt. Als Beispiel seien hier ein mechanisches Getriebe oder ein Überlagerungsgetriebe, z. B. ein Planetengetriebe genannt. Der elektrische Stellmotor 4 wird durch eine, hier nicht weiter definierte, Leistungsendstufe 3 angesteuert, die ihrerseits ihr Steuersignal Uₐ von einem Stromregler 2 bekommt. Der Stromregler 2 regelt die Spannung Uₐ, die dem elektrischen Stellmotor 4 zugeführt wird aufgrund der Stromdifferenz zwischen einem vom Prozessrechner 1 vorgegebenen Sollstrom Iₛₒₗₗ und der Iststromstärke Iᵢₛₜ, die vom Stromsensor 6 geliefert wird.

Die Sollstromstärke Iₛₒₗₗ ihrerseits wird im Prozessrechner 1 von einer hier nicht weiter definierten Lageregelung vorgegeben.

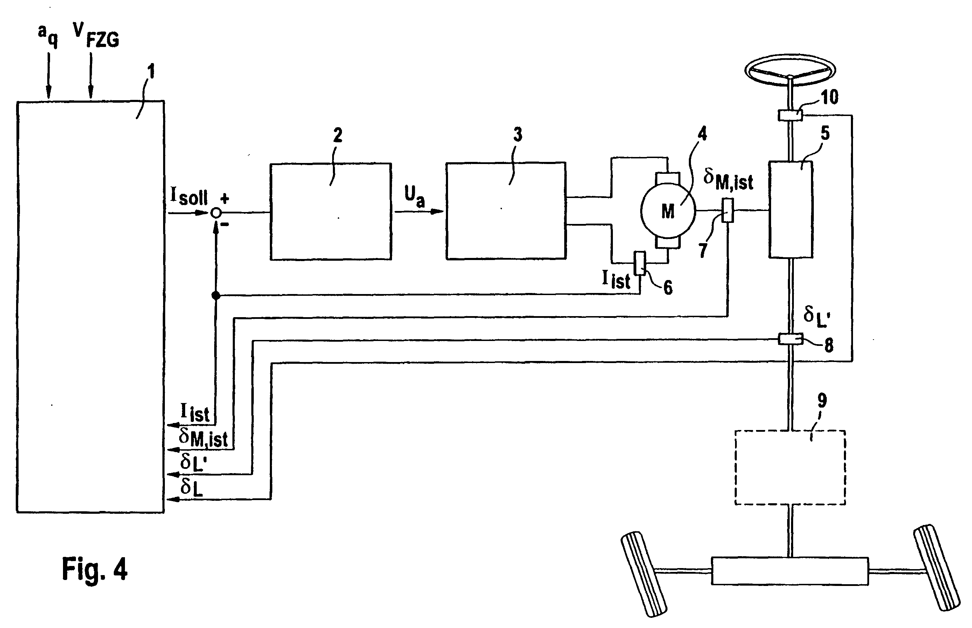

Figur 4 stellt als ein Ausführungsbeispiel einen elektromotorischen Lenksteller für ein elektronisches Lenksystem dar. Das dargestellte Beispiel ist auf eine elektronische Lenkstellung von zwei durch eine Spurstange miteinander verbundenen gelenkten Rädern (Vorderrädern) gerichtet, kann jedoch ohne weiteres auf ein elektronisches Lenksystem übertragen werden, bei dem für jedes gelenkte Rad jeweils ein elektromotorischer Lenksteller vorhanden ist. Es ist zu bemerken, dass Figur 4 das Blockschaltbild der Figur 1 enthält und um die für den Lenksteller spezifischen Komponenten und Signale ergänzt ist.

Gemäß Figur 4 erhält der Prozessrechner 1 außer dem Iststrom Iᵢₛₜ vom Stromsensor 6, der Istlage δ_{M,ist} des als Lenksteller dienenden Elektromotors 4, die vom Positionssensor 7 geliefert wird sowie der Istlage δ_{L}' beispielsweise eines Überlagerungsgetriebes 5 einen Lenkradwinkel δ_{L} von einem mit der Lenkradwelle verbundenen Winkelsensor 10 sowie Sensorsignale a_{q}, V_{Fzg}, die den Fahrzustand des Fahrzeugs angeben und von nicht dargestellten Sensoren oder von anderen im Fahrzeug enthaltenen Steuergeräten geliefert werden. Der Prozessrechner 1 ermittelt aus den ihm eingegebenen gemessenen oder ermittelten Eingangssignalen den Stromsollwert Iₛₒₗₗ, welcher in einem Vergleicher mit dem gemessenen Stromistwert Iᵢₛₜ verglichen wird. Das durch den Vergleich erzeugte Vergleichssignal wird dem Stromregler 2 eingegeben, der am Ausgang eine geregelte Spannung Uₐ der Leistungsendstufe 3 anlegt.

Der als Lenksteller eingesetzte Elektromotor 4 ist beispielsweise ein permanenterregter Gleichstrommotor, der einen Eingang des Uberlagerungsgetriebes 5 beaufschlagt. Der andere Eingang des Überlagerungsgetriebes 5 wird von dem vom Fahrer am Lenkrad vorgegebenen Lenkradwinkel δ_{L} beaufschlagt. Das Uberlagerungsgetriebe 5 erzeugt an seinem Ausgang einen überlagerten Lenkwinkel δ_{L}', der, wie gesagt, von einem Winkelsensor 8 gemessen wird. Der vom Überlagerungsgetriebe erzeugte überlagerte Lenkwinkel δ_{L}' wird dann gegebenenfalls über eine Servoeinrichtung 9 dem Lenkgetriebe und damit den gelenkten Rädern zugeführt.

Die bislang anhand der Figur 4 beschriebenen Funktionen eines mit einem Elektromotor als Lenksteller ausgestatteten elektronischen Lenksystems sind bekannt.

Zweck der Erfindung ist es in diesem Ausführungsbeispiel, die für die Sicherheitsüberwachung eines solchen elektromotorischen Lenkstellers notwendigen Informationen zu liefern, um die Stellgüte des Antriebs (Erreichen der Sollposition in einer definierten Zeit) bewerten und Entscheidungen zur Abschaltung fällen zu können.

Die Schwierigkeit im Sicherheitskonzept besteht darin, das richtige Kriterium zu finden, das zur Abschaltung führt. Eine alleinige Auswertung der von den genannten Sensoren gelieferten Signale führt nicht zum Ziel; vielmehr muß das dynamische Verhalten des Gesamtsystems in die Betrachtungen einbezogen werden.

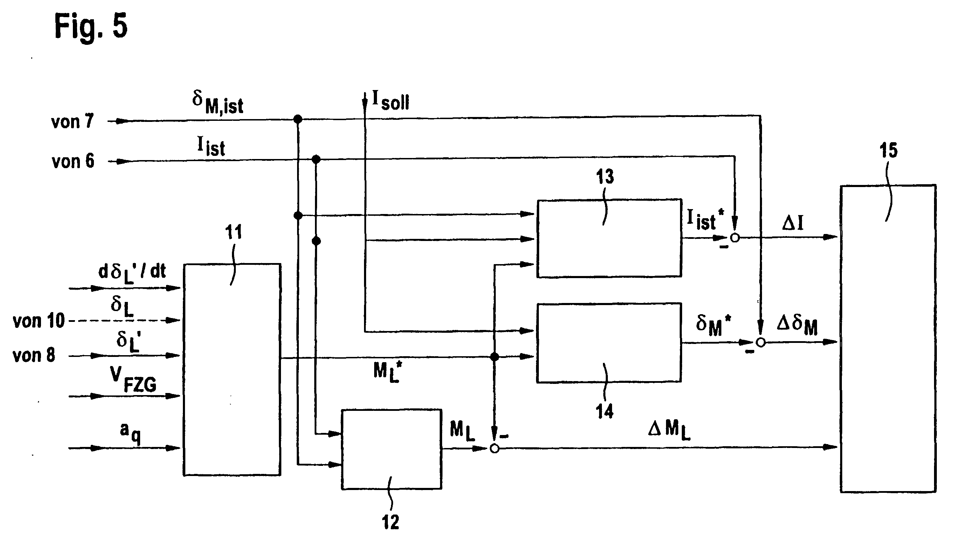

Die Figur 5 zeigt in Form schematischer Funktionsblöcke ein Ausführungsbeispiel der erfindungsgemäßen, modellgestützten Überwachungseinrichtung (vgl. Fig. 2) beispielhaft angewendet auf eine Sicherheitsüberwachung eines elektromotorischen Lenkstellers, wie er in Figur 4 gezeigt ist und oben beschrieben wurde.

In diesem erfindungsgemäßen Ausführungsbeispiel ist ein Lastmomentschätzer 11 vorgesehen, der aufgrund des Fahrzustand des Fahrzeuges, wie er beispielhaft durch ein Fahrzeuggeschwindigkeitssignal V_{Fzg} und ein Querbeschleunigungssignal a_{q} angegeben ist und aufgrund von entsprechenden Sensoren gelieferten Signalen, beispielsweise dem vom Winkelsensor 8 gelieferten Lenkwinkel δ_{L}' am Ausgang des Überlagerungsgetriebes 5 und dessen zeitlicher Ableitung dδ_{L}'/dt ein theoretisches Lastmoment M_{L}* schätzt, welches der elektromotorische Lenksteller 4 bei diesem speziellen Fahrzustand des Fahrzeuges aufbringen müßte.

Wenn das Lenksystem des Fahrzeugs mit einer kraftunterstützenden Hilfskraftlenkung (Servolenkung) 9 ausgestattet ist, ist im Lastmomentschätzer 11 die Kennlinie oder das Kennlinienfeld der Servolenkung 9 gespeichert. Dann kann abhängig vom Lenkradwinkel δ_{L}, gemessen durch den Winkelsensor 10 oder von der Lenkgeschwindigkeit am Lenkrad dδ_{L}/dt oder von der erwähnten zeitlichen Ableitung dδ_{L}'/dt des vom Winkelsensor 8 gemessenen Ausgangslenkwinkels δ_{L}' vom Lastmomentschätzer 11 anhand des Kennlinienfeldes ein Schätzwert M_{L}* für das Lastmoment ermittelt werden.

Das vom Lastmomentschätzer 11 geschätzte theoretisch aufzubringende Lastmoment M_{L}* wird in einem Vergleichsglied mit dem tatsächlich vom elektromotorischen Lenksteller 4 aufgebrachten Moment M_{L} verglichen, welches unter Benutzung eines Motormodells 12 aus dem vom Stromsensor 6 gemessenen Stromistwert Iᵢₛₜ und der vom Winkelsensor 7 gemessenen Istposition δ_{M,ist} berechnet wurde. Dabei ist das Motorenmodell 12 ein auf dem Maschinenmodell des Gleichstrommotors 4 beruhendes Modell.

Die vom Vergleichsglied erzeugte Momentendifferenz ΔM_{L} wird einer Fehlerauswertungseinrichtung 15 zugeführt. Abhängig von der Größe und der Dynamik des Fehlers werden die verschiedenen Entscheidungen im Sicherheitskonzept des elektronischen Lenksystems gefällt, d. h. sofortige Abschaltung, Notlauf, Warnsignalgabe, usw. Ferner wird, wie nachstehend ausgeführt wird, die Gültigkeit oder Plausibilität der von einem Modell-Stromregelkreis 13 und einem Modell-Lageregelkreis 14 an die Fehlerauswertungseinrichtung gelieferten Signale ΔI und Δδ_{M} entschieden.

Das Modell-Stromregelkreis 13 zeichnet sich dadurch aus, daß unter Ausnutzung des regelungstechnischen Modells der Regelstrecke und unter Verwendung der Größen Iₛₒₗₗ, δ_{M,ist} und M_{L}* als Eingangsgrößen ein theoretischer Wert für den Iststrom Iᵢₛₜ* berechnet wird, der sich bei der Stromeinspeisung des Elektromotors 4 mit dem Sollstrom Iₛₒₗₗ einstellen sollte. Der vom Modell-Stromregelkreis 13 ermittelte theoretische Wert Iᵢₛₜ* des Iststroms wird dann mit dem vom Stromsensor 6 gemessenen Iststromwert Iᵢₛₜ verglichen. Die Stromdifferenz ΔI wird der Fehlerauswertungseinrichtung 15 zugeführt.

Das Modell-Lageregelkreis 14 berechnet unter Ausnutzung des regelungstechnischen Modells der Lageregelstrecke unter Verwendung der Eingangsgrößen Iₛₒₗₗ und M_{L}* einen theoretischen Wert für die Istposition δ_{M}* des Stellmotors 4. Dieser theoretische Wert δ_{M}* des Stellmotors 4 sollte sich theoretisch bei der Einspeisung des Sollstroms Iₛₒₗₗ in den Stellmotor 4 einstellen. Der theoretisch anhand des Modells-Lageregelkreis 14 ermittelte Wert δ_{M}* der Istposition wird dann mit dem vom Winkelsensor 7 gemessenen Winkel δ_{M,ist} verglichen. Die Positionsdifferenz Δδ_{M} wird ebenfalls der Fehlerauswertungseinrichtung 15 zugeführt.

Die Fehlerauswertungseinrichtung 15 wertet, wie schon erwähnt, beide Differenzsignale ΔI und Δδ_{M} hinsichtlich ihrer Gültigkeit oder Plausibilität aus. Bei Gültigkeit bestimmen die Differenzsignale ΔI und Δδ_{M} i. V. m. ΔML von Einheit 12 von der Fehlerauswertungseinrichtung 15 initiierte, hier nicht weiter beschriebene weitere Maßnahmen des Sicherheitssystems, wie z. B. sofortige Abschaltung, Notlauf, Warnsignalgabe usw. Allerdings kann, wie erwähnt, die Gültigkeit der vom Modell-Stromregelkreis 13 und vom Modell-Lageregelkreis 14 erhaltenen theoretischen Ausgangssignale Iᵢₛₜ* und δ_{M}* aufgrund der von dem Motormodell 12 stammenden Momentendifferenz ΔM_{L} in Frage gestellt werden.

Es ist zu erwähnen, daß die in Figur 5 dargestellten und oben beschriebenen Funktionsblöcke der modellgestützen Überwachungseinrichtung physikalisch Teile des dafür eingerichteten Prozessrechners 1 gemäß Figur 3 sein können. Mit dem oben beschriebenen Ausführungsbeispiel der modellgestützten Überwachung eines für einen elektromotorischen Steller eines elektronischen Lenksystems dienenden Regelungssystems gemäß der Erfindung kann ohne einen Drehmomentensensor allein mit den beschriebenen und in Figur 3 explizit angegebenen Winkel- und Strommeßsensoren beurteilt werden, ob das Lenksystem ordnungsgemäß arbeitet oder ob eine Abschaltung oder ein Notlauf des elektronischen Lenksystems angezeigt ist, z. B. aufgrund eines Wellenbruchs, Lagerverschleiß, Zahnflankenbruchs, erhöhte Reibung oder aufgrund außergewöhnlicher äußerer Umstände, wie sie z. B. beim Lenken des Fahrzeugs gegen einen Bordstein auftreten können.

Sinngemäß dasselbe gilt für andere nicht im Detail beschriebene Anwendungen des Regelungssystems bzw. der modellgestützten Überwachungseinrichtung gemäß der Erfindung, z. B. bei einem Steller eines Wankstabilisierungssystems oder eines elektronischen Bremssystems im Kraftfahrzeug, bei denen mit dem erfindungsgemäßen Regelungssystem ebenfalls eine Bewertung einer Stellgüte des eingesetzten Stellers mit Hilfe der modellgestützten Überwachungseinrichtung durchgeführt werden kann.

## Patentansprüche

1. System zur Regelung eines einen elektrischen Stellmotor (4) aufweisenden Stellers in einem Kraftfahrzeug, mit einem Regler (2), der abhängig vom Vergleich eines aus einem Betriebszustand (a_{q}, V_{Fzg}) des Kraftfahrzeugs ermittelten Sollwerts (Iₛₒₗₗ), der einer gewünschten Stellposition entspricht, mit einem Istwert (Iᵢₛₜ, δ _{M,ist}), der der tatsächliche Stellposition des Stellers entspricht, eine Stellgröße (Uₐ) ermittelt und an den Steller abgibt, **gekennzeichnet durch** eine modellgestützte Überwachungseinrichtung (11A-15A; 11-15), die in Abhängigkeit von Sollwerten (Iₛₒₗₗ, Uₛₒₗₗ) des elektrischen Stellmotors (4), von **durch** jeweilige Sensoren (6, 7, 8) gemessen Istwerten (Iᵢₛₜ, δ _{M, ist}, δ_{L}') desselben und vom Betriebszustand des Fahrzeugs sowie auf der Basis eines ein Sollverhalten jeweils des Stellers (3, 4) und der in ihm enthaltenen Regelstrecken nachbildenden Modells (12) zumindest eine Ausgangsgröße (Δ*M* _{L}, Δδ_{M}, Δ*I*) zur Bewertung einer Stellgüte des Stellers (3, 4) erzeugt, wobei die Überwachungseinrichtung (11A-15A; 11-15) einen Lastmomentschätzer (11A, 11) aufweist, der ein theoretisches Lastmoment (M_{L}*) in Abhängigkeit von den **durch** die Sensoren (7, 8) gemessenen Istgrößen, insbesondere Positionsistwerten (Iᵢₛₜ, δ_{M,ist}, δ_{L}'), und/oder vom Betriebszustand (a_{q}, V_{Fzg}) des Fahrzeugs schätzt, und die modellgestützte Überwachungseinrichtung (11A-15A, 11-15) abhängig von dem Sollwert (Iₛₒₗₗ, Uₛₒₗₗ) und dem geschätzten theoretischen Lastmoment (M_{L}*) einen theoretischen Istwert (δ_{*M*}*, M_{L}*, Iᵢₛₜ*) für die Position und/oder für das tatsächlich aufgebrachte Moment und/oder den Iststrom des Stellmotors (4) berechnet und ein Differenzsignal (Δδ _{M}, Δω _{M}, Δ*M* _{L}, Δ*I* ) zwischen dem (den) berechneten theoretischen Istwert bzw. Istwerten und dem entsprechenden sensorisch gemessenen Istwert oder einem von wenigstens einem sensorisch gemessenen Istwert direkt abgeleiteten Wert zur Bewertung der Stellgüte erzeugt.

2. Regelungssystem nach Anspruch 1, **dadurch gekennzeichnet, daß** die Überwachungseinrichtung (11-15; 11A-15A) das vom Lastmomentschätzer (11; 11A) geschätzte theoretische Lastmoment(M_{L}*) mit einem vom Stellmotor (4) tatsächlich aufgebrachten Motormoment (M_{L}) vergleicht, welches mittels eines Motormodelles(12; 12A) des Stellmotors (4) abhängig vom gemessenen Istwert (Iᵢₛₜ) des Motorstroms und der vom entsprechenden Positionssensor (7) gemessenen Motor-Istposition (δ_{M,ist}) berechnet wird, und aus dem Vergleich ein Momentendifferenzsignal (ΔM_{L}) zur Bewertung der Stellgüte erzeugt.

3. Regelungssystem nach einem der vorangehenden Ansprüche, **dadurch gekennzeichnet, daß** die Überwachungseinrichtung (11-15; 11A-15A) in Abhängigkeit vom Stromsollwert (Iₛₒₗₗ) des Stellmotors (4), der vom entsprechenden Positionssensor (7) gemessenen Motor-Istposition (δ_{M,ist}) und dem vom Lastmomentschätzer (11; 11A) geschätzten theoretischen Lastmoment (M_{L}*) einen theoretischen Stromistwert (Iᵢₛₜ*) für den Motorstrom berechnet und ein Differenzsignal (ΔI) zwischen dem berechneten Stromistwert (Iᵢₛₜ*) und dem vom Stromsensor (6) gemessenen Stromistwert (Iᵢₛₜ) zur Bewertung der Stellgüte erzeugt.

4. Regelungssystem nach einem der vorangehenden Ansprüche, **dadurch gekennzeichnet, daß** die Überwachungseinrichtung (11A-15A; 11-15) einen theoretischen Istwert (δ_{M}*) für die Position des Stellmotors (4) berechnet, die sich in Reaktion auf die Sollgröße beim Stellmotor (4) einstellen sollte, und ein Differenzsignal (Δδ_{M}, Δω_{M}) zwischen dem berechneten theoretischen Positionsistwert (δ_{M}*) und dem vom entsprechenden Positionssensor (7) gemessenen Positionsistwert (δ_{M,ist}) zur Bewertung der Stellgüte erzeugt.

5. Regelungssystem nach einem der Ansprüche 2 bis 4, **dadurch gekennzeichnet, daß** die Überwachungseinrichtung (11-15; 11A-15A) weiterhin eine Fehlerauswertungseinrichtung (15, 15A) aufweist, welche das Momentendifferenzsignal (ΔM_{L}), das Stromistwert-Differenzsignal (ΔI) und das Positionsistwertdifferenzsignal (Δδ_{M}, Δω_{M}) als Eingangsgrößen empfängt und daraus sicherheitsrelevante Fehler- und Ausfallsignale erzeugt.

6. Regelungssystem nach Anspruch 5, **dadurch gekennzeichnet, daß** die Fehlerauswertungseinrichtung (15, 15A) die Gültigkeit des Stromistwert-Differenzsignals (ΔI) und des Positionsistwert-Differenzsignals (Δδ_{M}) wenigstens abhängig vom Momenten-Differenzsignal (ΔM_{L}) entscheidet.

7. Regelungssystem nach einem der Ansprüche 1 bis 6, **dadurch gekennzeichnet, daß** der elektrische Stellmotor (4) ein permanent erregter Gleichstrommotor ist.

8. Regelungssystem nach einem der Ansprüche 1 bis 6, **dadurch gekennzeichnet, daß** der elektrische Stellmotor ein elektronisch kommutierter Motor ist.

9. Regelungssystem nach einem der Ansprüche 1 bis 6, **dadurch gekennzeichnet, daß** der elektrische Stellmotor ein Asynchronmotor, insbesondere ein Drehstromasynchronmotor ist.

10. Regelungssystem nach einem der Ansprüche 1 bis 6, **dadurch gekennzeichnet, daß** der elektrische Stellmotor ein Piezomotor ist.

11. Regelungssystem nach einem der Ansprüche 1 bis 6, **dadurch gekennzeichnet, daß** der elektrische Stellmotor ein Wanderwellenmotor ist.

12. Verwendung des Regelungssystems nach einem der vorangehenden Ansprüche für ein elektronisches Lenksystem, das einen elektrischen Lenkstellmotor (4) aufweist, der einem an einem Lenkrad von einem Fahrer vorgegebenen Lenkradwinkel (δ_{L}) einen Zusatzlenkwinkel (δM) für jeweils ein linkes und rechtes Rad oder zwei gemeinsam gelenkte Räder überlagert, wobei die Überwachungseinrichtung (11A-15A) Signale für die Sicherheitsüberwachung des Lenksystems liefert.

13. Verwendung des Regelungssystems gemäß Anspruch 12, **dadurch gekennzeichnet, daß** das Lenksystem zur Einzellenkung eines linken und rechten Rades eingerichtet ist.

14. Verwendung nach Anspruch 12, **dadurch gekennzeichnet, daß** das Lenksystem zur Lenkung von zwei mit einer Spurstange verbundenen Rädern eingerichtet ist.

15. Verwendung des Regelungssystems nach einem der Ansprüche 13 oder 14, **dadurch gekennzeichnet, daß** die Sicherheitsüberwachung Sicherheitsmaßnahmen, wie eine Fehleranzeige, eien Warnsignalgabe, einen Notlauf oder eine Abschaltung des elektronischen Lenksystems initiiert.

16. Verwendung des Regelungssystems nach einem der Ansprüche 1 bis 11 für ein elektronisches Wankstabilisierungssystem, das mindestens einen elektrischen Wankstabilisierungsmotor aufweist.

17. Verwendung des Regelungssystems nach einem der Ansprüche 1 bis 11 für ein elektronisches Bremssystem, das mindestens einen elektrischen Bremsstellmotor aufweist.

18. Verwendung des Regelungssystems nach einem der Ansprüche 1 bis 11 für einen Lenkradsimulator für Steerby-Wire Lenkungen, wo abhängig vom Fahrerlenkwunsch ein fahrzustandsabhängiges Gegenmoment erzeugt wird.

## Claims

1. System for controlling an actuator, having an electric control motor (4), in a motor vehicle, comprising a controller (2) which determines a manipulated variable (Uₐ) as a function of the comparison of a desired value (Iₛₒₗₗ), which is determined from an operating condition (a_{q}, Vᵥₑₕ) of the motor vehicle and corresponds to a desired actuating position, with an actual value (I_{act}, δ_{M,act}), which corresponds to the actual actuating position of the actuator, and outputs the said manipulated variable to the actuator, **characterized by** a model-based monitoring device (11A - 15A; 11 - 15) which, for the purpose of evaluating a quality of actuation of the actuator (3, 4), generates at least one output variable (ΔM_{L}, Δδ_{M}, ΔI) as a function of desired values (I_{des}, U_{des}) of the electric control motor (4), of actual values (I_{act}, δ_{M,act}, δ_{L}') thereof, which are measured by respective sensors (6, 7, 8), and of the operating condition of the vehicle as well as on the basis of a model (12) which respectively simulates a desired behaviour of the actuator (3, 4) and of the controlled systems contained in the latter, the monitoring device (11A - 15A; 11 - 15) having a load torque estimator (11A, 11) which estimates a theoretical load torque (M*_{L}), as a function of the actual values, in particular actual position values (I_{act}, δ_{M,act}, δ_{L}'), measured by the sensors (7, 8), and/or of the operating condition (a_{q}, Vᵥₑₕ) of the vehicle, and the model-based monitoring device (11A - 15A, 11 - 15) calculating, as a function of the desired value (Iₛₒₗₗ, Uₛₒₗₗ) and of the estimated theoretical load torque (M_{L}*), a theoretical actual value (δ_{M}*, M_{L}*, I_{act}*) for the position and/or for the actually applied torque and/or the actual current of the control motor (4), and, for the purpose of evaluating the quality of actuation, generating a difference signal (Δδ_{M}, Δω_{M}, ΔM_{L}, ΔI) between the calculated theoretical actual value or actual values and the corresponding actual value, measured by sensor, or a value directly derived from at least one actual value measured by sensor.

2. Control system according to Claim 1, **characterized in that** the monitoring device (11 - 15; 11A - 15A) compares the theoretical load torque (M_{L}*) estimated by the load torque estimator (11; 11A) with a motor torque (M_{L}), which is actually applied by the control motor (4), is calculated by means of a motor model (12; 12A) of the control motor (4) as a function of the measured actual value (I_{act}) of the motor current and the actual motor position (δ_{M,act}) measured by the corresponding position sensor (7), and generates from the comparison a torque difference signal (ΔM_{L}) for the purpose of evaluating the quality of actuation.

3. Control system according to one of the preceding claims, **characterized in that** the monitoring device (11 - 15; 11A - 15A) calculates a theoretical actual current value (I_{act}*) for the motor current as a function of the desired current value (I_{des}) of the control motor (4), of the actual motor position (δ_{M,act}), measured by the corresponding position sensor (7), and of the theoretical load torque (M_{L}*) estimated by the load torque estimator (11; 11A), and generates a difference signal (ΔI) between the calculated actual current value (I_{act}*) and the actual current value (I_{act}), measured by the current sensor (6), for the purpose of evaluating the quality of actuation.

4. Control system according to one of the preceding claims, **characterized in that** the monitoring device (11 - 15; 11A - 15A) calculates a theoretical actual value (δ_{M}*) for the position of the control motor (4) which should be adopted in response to the desired variable in the case of the control motor (4), and generates a difference signal (Δδ_{M}, Δω_{M}) between the calculated theoretical actual position value (δ_{M}*) and the actual position value (δ_{M,act}), measured by the corresponding position sensor (7), for the purpose of evaluating the quality of actuation.

5. Control system according to one of Claims 2 to 4, **characterized in that** the monitoring device (11 - 15; 11A - 15A) furthermore has an error analysis device (15, 15A) which receives the torque difference signal (ΔM_{L}), the actual current value difference signal (ΔI) and the actual position value difference signal (Δδ_{M}, Δω_{M}) as input variables, and generates safety-relevant error and failure signals therefrom.

6. Control system according to Claim 5, **characterized in that** the error analysis device (15, 15A) decides on the validity of the actual current value difference signal (ΔI) and of the actual position value difference signal (Δδ_{M}) at least as a function of the torque difference signal (ΔM_{L}).

7. Control system according to one of Claims 1 to 6, **characterized in that** the electric control motor (4) is a permanently excited DC motor.

8. Control system according to one of Claims 1 to 6, **characterized in that** the electric control motor is an electronically commutated motor.

9. Control system according to one of Claims 1 to 6, **characterized in that** the electric control motor is an asynchronous motor, in particular a three-phase asynchronous motor.

10. Control system according to one of Claims 1 to 6, **characterized in that** the electric control motor is a piezomotor.

11. Control system according to one of Claims 1 to 6, **characterized in that** the electric control motor is a travelling-wave motor.

12. Use of the control system according to one of the preceding claims for an electronic steering system which has an electric steering control motor (4) which superimposes on a steering wheel angle (δ_{L}) prescribed at a steering wheel by a driver an additional steering angle (δM) for respectively a left-hand and right-hand wheel or two jointly steered wheels, the monitoring device (11A - 15A) supplying signals for monitoring the safety of the steering system.

13. Use of the control system according to Claim 12, **characterized in that** the steering system is set up for the individual steering of a left-hand and right-hand wheel.

14. Use according to Claim 12, **characterized in that** the steering system is set up for steering two wheels connected to one steering tie rod.

15. Use of the control system according to one of Claims 13 or 14, **characterized in that** the safety monitoring system initiates safety measures such as displaying errors, outputting a warning signal, operating under emergency conditions or switching off the electronic steering system.

16. Use of the control system according to one of Claims 1 to 11 for an electronic roll stabilization system which has at least one electric roll stabilization motor.

17. Use of the control system according to one of Claims 1 to 11 for an electronic brake system which has at least one electric brake control motor.

18. Use of the control system according to one of Claims 1 to 11 for a steering wheel simulator for steer-by-wire steering systems where a countertorque dependent on driving conditions is produced as a function of the driver's steering intention.

## Revendications

1. Système de régulation d'un organe de commande doté d'un servomoteur électrique dans un véhicule automobile avec un régulateur (2) qui calcule une grandeur de réglage (Uₐ) en fonction de la comparaison entre une valeur de consigne (Iₛₒₗₗ) calculée à partir d'un état de fonctionnement (a_{q}, V_{Fzg}) du véhicule automobile et correspondant à une position de réglage souhaitée et une valeur réelle (Iᵢₛₜ, δ_{M,ist}) correspondant à la position de réglage effective de l'organe de commande et qui la transmet à l'organe de commande,
**caractérisé en ce qu'**
une installation de surveillance (11A-15A; 11-15) assistée par modèle, génère au moins une grandeur de sortie (Δ*M*_{L}, Δδ_{M}, Δ*I*) pour évaluer une qualité de réglage de l'organe de commande (3, 4), en fonction des valeurs de consigne (Iₛₒₗₗ, Uₛₒₗₗ) du servomoteur électrique (4), des valeurs réelles (Iᵢₛₜ, δ_{M,ist}, δ_{L}') du servomoteur électrique (4) mesurées par les capteurs respectifs (6, 7, 8) et de l'état de fonctionnement du véhicule automobile ainsi que sur la base d'un modèle (12) reproduisant un comportement de consigne de l'organe de commande (3, 4) respectif et des systèmes asservis qu'il contient,
l'installation de surveillance (11A-15A ; 11-15) comprend un estimateur de couple résistant (11A,11) qui évalue un couple résistant théorique (M_{L}*) en fonction des grandeurs réelles mesurées par les capteurs (7,8), notamment des valeurs réelles de position (Iᵢₛₜ, δ_{M,ist}, δ_{L}') et/ou en fonction de l'état de fonctionnement (a_{q}, V_{Fzg}) du véhicule automobile, et
l'installation de surveillance (11A-15A ; 11-15) assistée par modèle calcule une valeur réelle théorique (δ'_{M}, M_{L}*, Iᵢₛₜ*) pour la position et/ou le couple effectivement appliqué et/ou le courant réel du servomoteur (4) en fonction de la valeur de consigne (Iₛₒₗₗ, Uₛₒₗₗ) et du couple résistant théorique évalué (M_{L}*) et, pour évaluer la qualité du réglage, elle crée un signal différentiel (Δδ_{M}, Δω_{M}, Δ*M*_{L}, Δ*I*) entre la(les) valeur(s) réelle(s) théorique(s) calculée(s) et la valeur réelle mesurée en conséquence de manière sensorielle ou une valeur dérivée directement d'au moins une valeur réelle mesurée de manière sensorielle.

2. Système de régulation selon la revendication 1,
**caractérisé en ce que**
l'installation de surveillance (11-15 ; 11A-15A) compare le couple résistant (M_{L}*) théorique évalué par l'estimateur de couple résistant (11 ; 11A) à un couple moteur (M_{L}) appliqué effectivement par le servomoteur (4), lequel couple moteur est calculé à l'aide d'un modèle de moteur (12 ; 12A) du servomoteur (4) en fonction de la valeur réelle mesurée (Iᵢₛₜ) du courant du moteur et de la position réelle du moteur (δ_{M,ist}) mesurée par le capteur de positionnement (7) correspondant, et génère à partir de cette comparaison un signal différentiel de couple (ΔML) pour évaluer la qualité du réglage.

3. Système de régulation selon l'une quelconque des revendications précédentes,
**caractérisé en ce que**
l'installation de surveillance (11-15 ; 11A-15A) calcule une valeur réelle de courant théorique (Iᵢₛₜ*) pour le courant du moteur en fonction de la valeur de consigne du courant (Iₛₒₗₗ) du servomoteur (4), de la position réelle du moteur (δ_{M,ist}) mesurée par le capteur de position correspondant (7) et du couple résistant (M_{L}*) théorique évalué par l'estimateur de couple (11 ; 11A), et génère un signal différentiel (ΔI) entre la valeur réelle du courant calculée (Iᵢₛₜ*) et la valeur réelle du courant (Iᵢₛₜ) mesurée par le capteur de courant (6) pour évaluer la qualité du réglage.

4. Système de régulation selon l'une quelconque des revendications précédentes,
**caractérisé en ce que**
l'installation de surveillance (11A-15A ; 11- 15) calcule une valeur réelle théorique (δ_{M}*) pour la position du servomoteur (4) qui devrait être réglée en réaction à la grandeur théorique pour le servomoteur (4) et génère un signal différentiel (Δδ_{M}, Δω_{M}) entre la valeur réelle théorique calculée de la position (δ_{M}*) et la valeur réelle de la position (δ_{M,ist}) mesurée par le capteur de position (7) correspondant pour évaluer la qualité du réglage.

5. Système de régulation selon l'une quelconque des revendications 2 à 4,
**caractérisé en ce que**
l'installation de surveillance (11-15; 11A-15A) comprend par ailleurs une installation d'évaluation des erreurs (15, 15A), qui reçoit le signal différentiel des couples (ΔM_{L}), le signal différentiel de la valeur réelle du courant (ΔI) et le signal différentiel de la valeur réelle de la position (Δδ_{M}, Δω_{M}) en tant que grandeurs d'entrée, et qui génère à partir de ces données les signaux d'erreur et de défaillance pertinents pour la sécurité.

6. Système de régulation selon la revendication 5,
**caractérisé en ce que**
l'installation d'évaluation des erreurs (15, 15A) décide de la validité du signal différentiel de la valeur réelle du courant (ΔI) et du signal différentiel de la valeur réelle de la position (Δδ_{M}) au moins en fonction du signal différentiel des couples (ΔM_{L}).

7. Système de régulation selon l'une quelconque des revendications 1 à 6,
**caractérisé en ce que**
le servomoteur électrique (4) est un moteur à courant continu excité en permanence.

8. Système de régulation selon l'une quelconque des revendications 1 à 6,
**caractérisé en ce que**
le servomoteur électrique est un moteur commuté par un système électronique.

9. Système de régulation selon l'une quelconque des revendications 1 à 6,
**caractérisé en ce que**
le servomoteur électrique est un moteur asynchrone, notamment un moteur asynchrone triphasé.

10. Système de régulation selon l'une quelconque des revendications 1 à 6,
**caractérisé en ce que**
le servomoteur électrique est un moteur piézoélectrique.

11. Système de régulation selon l'une quelconque des revendications 1 à 6,
**caractérisé en ce que**
le servomoteur électrique est un moteur à onde progressive.

12. Utilisation du système de régulation selon l'une quelconque des revendications précédentes, pour un système de direction électronique qui comprend un servomoteur électrique de direction (4) qui superpose à un angle du volant de direction (δ_{L}) prédéfini par un conducteur sur un volant de direction un angle de direction supplémentaire (δ_{M}) pour respectivement une roue droite et gauche ou deux roues guidées ensemble, l'installation de surveillance (11A-15A) émettant des signaux pour la surveillance de sécurité du système de direction.

13. Utilisation du système de régulation selon la revendication 12,
**caractérisée en ce que**
le système de direction est configuré pour diriger individuellement la roue gauche et la roue droite.

14. Utilisation selon la revendication 12,
**caractérisée en ce que**
le système de direction est configuré pour diriger deux roues reliées à une barre d'accouplement.

15. Utilisation du système de régulation selon l'une quelconque des revendications 13 ou 14,
**caractérisée en ce que**
la surveillance de sécurité déclenche des mesures de sécurité comme un affichage des erreurs, une émission d'un signal avertisseur, un fonctionnement en cas d'urgence ou un arrêt du système de direction électronique.

16. Utilisation du système de régulation selon l'une quelconque des revendications 1 à 11, pour un système de stabilisation électronique du roulis qui comporte au moins un moteur électrique de stabilisation du roulis.

17. Utilisation du système de régulation selon l'une quelconque des revendications 1 à 11, pour un système de freinage électronique qui comporte au moins un servomoteur électrique de freinage.

18. Utilisation du système de régulation selon l'une quelconque des revendications 1 à 11, pour un simulateur de volant de direction pour des directions « steer-by-wire » (commande câblée), dans lesquelles un couple résistant dépendant de l'état du véhicule automobile est généré en fonction du souhait de direction du conducteur.
